# EUROPEAN PATENT SPECIFICATION

(11) **EP 1 416 182 B1**
(45) Date of publication and mention of the grant of the patent: **23.11.2011**
(21) Application number: 03078418.5
(22) Date of filing: 30.10.2003
(51) Int. Cl.: F16D 48/06, B60W 10/04

(54) **Clutch control device**
Kupplungssteuerung
Dispositif de commande d'embrayage

(30) Priority: 30.10.2002 JP 2002315863
(43) Date of publication of application: 06.05.2004
(73) Proprietor: AISIN SEIKI KABUSHIKI KAISHA, Kariya-shi, Aichi-ken (JP); AISIN AI Co., Ltd., Nishio-shi, Aichi-ken (JP); Toyota Jidosha Kabushiki Kaisha, Toyota-shi, Aichi-ken (JP)
(72) Inventor: Terakawa, Tomomitsu, Anjo-shi, Aichi-ken (JP); Taguchi, Yoshinori, Anjo-shi, Aichi-ken (JP); Shimizu, Masaru, Toyota-shi, Aichi-ken (JP); Haneda, Yoshitomi, Anjo-shi, Aichi-ken (JP); Miyazaki, Takeshige, Anjo-shi, Aichi-ken (JP); Watanabe, Hideo, Toyota-shi, Aichi-ken (JP); Monji, Fuminori, Toyota-shi, Aichi-ken (JP); Nishizawa, Jun, Toyota-shi, Aichi-ken (JP); Ohi, Takao, Toyota-shi, Aichi-ken (JP)
(74) Representative: Marshall, John Grahame

(56) References cited:
- EP-A- 0 460 628
- WO-A-02/25133
- DE-A- 10 045 758
- DE-A- 10 155 459
- DE-A- 19 641 074
- DE-A- 19 818 809

## Description

### FIELD OF THE INVENTION

This invention generally relates to a clutch control device configured to change an engaged condition between a clutch disc and a flywheel by controlling activation of an actuator.

### BACKGROUND OF THE INVENTION

A system is known which automatically performs a series of gear ratio change operations including a clutch engaging or disengaging operation, a gear select operation, and a gear shift operation. The series of gear ratio change operations is performed for example by use of an actuator for a conventional manual transmission in response to vehicle driving conditions or a driver's intention. Taking the clutch engaging or disengaging operation as an example, the system controls a torque transmitted between a flywheel and a clutch disc by controlling actuation of a clutch actuator. Hereinafter, the torque transmitted therebetween is referred to as a clutch torque. An optimal clutch operation can be hence performed in response to vehicle driving conditions by controlling the clutch torque imposed by the actuator.

According to the aforementioned system, the clutch torque is actually controlled by controlling pressure load on the clutch disc relative to the flywheel by the actuator. That is, the clutch torque substantially corresponds to a value calculated by multiplying the pressure load on the clutch disc relative to the flywheel by a friction coefficient µ. Therefore, the control of the pressure load by the actuator can be practically considered as the control of the clutch torque.

EP-A-460628 discloses a clutch control system which takes the clutch disc temperature into account. Either only below a measured or calculated clutch disc temperature (T>K) or for all clutch disc temperatures a control algorithm is used which for increasing clutch temperatures moves the assumed position of initial contact between the clutch plate and flywheel progressively towards the last recorded position of initial contact.

In the light of the teaching of EP-A-460628, a need exists for providing an improved clutch control device capable of optimally controlling the clutch torque based upon the clutch temperature.

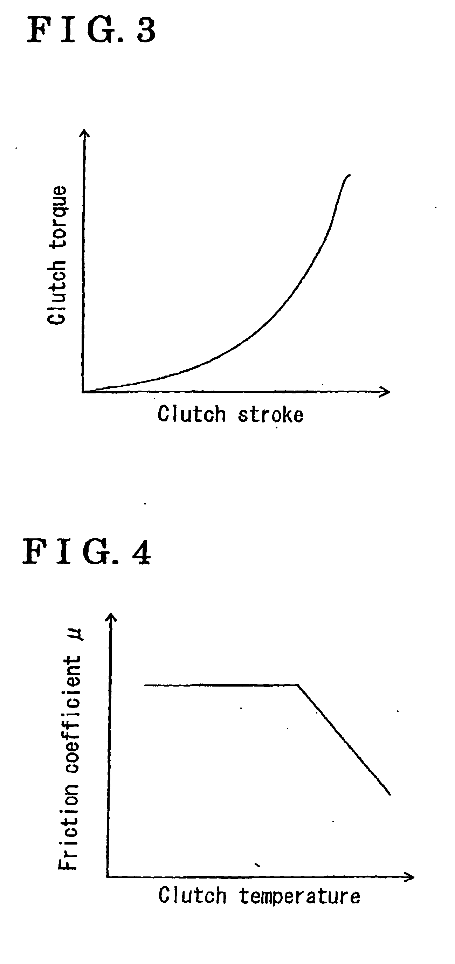

The Applicants have verified the manner in which the friction coefficient µ fluctuates in response to the temperature of the clutch disc - i.e., a clutch temperature. That is illustrated in FIG. 4 of this specification. For example, when the clutch temperature is relatively high, the friction coefficient µ is reduced. In this case, the actual clutch torque will be less than the intended clutch torque even if the pressure load has been controlled at a desired load value by the actuator.

### SUMMARY OF THE INVENTION

The invention provides a method of controlling the transmission of a clutch torque having the characterisitics of claim 1 herein.

### BRIEF DESCRIPTION OF THE DRAWING FIGURES

FIG. 1 is a block view schematically illustrating a vehicle control system according to an embodiment of the present invention;
FIG. 2 is a flowchart for explaining a clutch control according to the embodiment of the present invention;
FIG. 3 is a diagram for explaining a relationship of a clutch torque relative to a clutch stroke, and
FIG. 4 is a diagram for explaining a relationship between a clutch temperature and a frictional coefficient.

### DETAILED DESCRIPTION OF THE INVENTION

A preferred embodiment of the present invention will be described hereinbelow in detail with reference to the accompanying drawings.

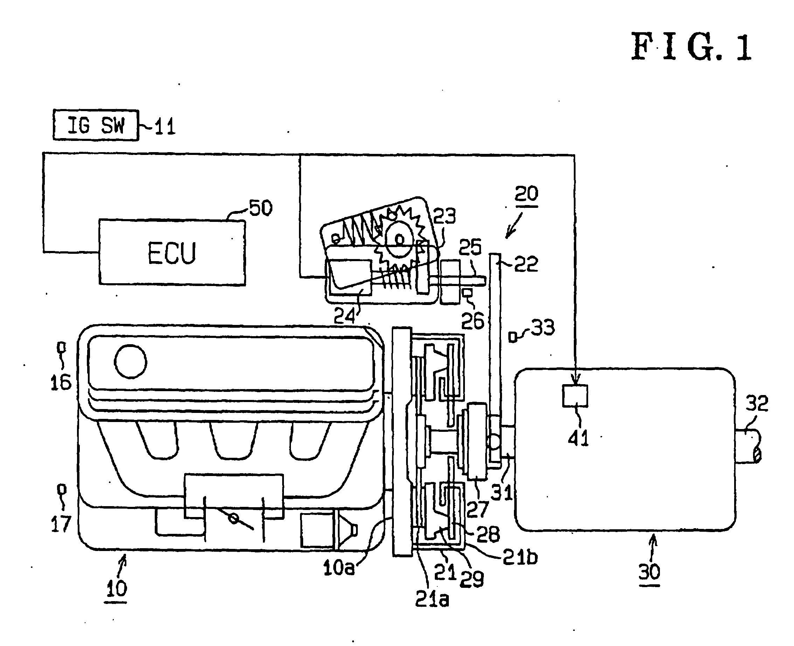

As illustrated in FIG. 1, a vehicle control system includes main elements such as an engine (a driving power source) 10. an automatic clutch assembly 20, an automated manual transmission 30, and an electronic control unit (ECU, a controller) 50. The automatic clutch assembly 20 incorporates a flywheel 10a configured to rotate integrally with a crankshaft - i.e., an output shaft of an internal combustion engine such as an engine 10. The automated manual transmission 30 is operatively linked to the engine 10 via the automatic clutch assembly 20. The engine 10 is provided with an ignition switch 11 for an engine ignition, an engine rotational speed sensor 16 for detecting rotational speed of the crankshaft Ne, and an engine water temperature sensor 17 for detecting engine water temperature Tw. Each of the ignition switch 11, the sensors 16 and 17 may be mounted on the engine 10 or may be mounted somewhere in the vehicle as illustrated in FIG. 1.

The automatic clutch assembly 20 includes a mechanical (dry type - single) friction clutch 21, a clutch lever 22, and an actuator 23 configured to control clutch torque by use of the clutch lever 22. The friction clutch 21 includes a clutch disc 21a which is disposed facing the flywheel 10a and is rotatable integrally with an input shaft 31 of the automated manual transmission 30. When the pressure load on the clutch disc 21a relative to the flywheel 10a varies, clutch torquetransmitted between the flywheel 10a and the clutch disc 21a varies in response to the change of the pressure load, The rotational speed transmitted between the flywheel 10a and the clutch disc 21 a substantially corresponds to rotational speed transmitted between the output shaft of the engine 10 and the input shaft 31 of the automated manual transmission 30 and is a product of transmitted clutch torque.

The clutch actuator 23 is provided with a direct current electric motor 24 as a driving power source. The clutch lever 22 varies its posture in response to forward or rearward movement of a rod 25 operated by the motor 24. A diaphragm spring 28 is made of a resilient metal and can be contacted by a release bearing 27 operated by the clutch lever 22. A pressure plate 29 in the friction clutch 21 is applied with pressure load from the distorted diaphragm spring 28 which is supported by clutch cover 21b at a fulcrum. The pressure plate 29 is mounted an a clutch cover 21b of the friction clutch 21 which is integrally rotatable with the flywheel 10a. When the clutch lever 22 varies its posture in response to the stroke of the rod 25 operated by the clutch actuator 23, the pressure load on the clutch disc 21a relative to the flywheel 10a is changed via the pressure plate 29, and the transmitted clutch torque is thereby controlled.

More particularly, when the rod 5 is moved forward - i.e., in the right direction as viewed in FIG. 1, the clutch lever 22 is operated in the clockwise direction. In this case, the pressure load on the clutch disc 21a relative to the flywheel 10a is reduced. In the meantime, when the rod 25 is retracted rearward -i.e., in a left direction in FIG. 1, the clutch lever 22 is operated in the counterclockwise direction. In this case the pressure load on the clutch disc 21 a relative to the flywheel 10a is increased,

The following description explains a relationship between the operation of the rod 25 and the rotational speed transmission by the friction clutch 2 1.

When the rod 25 is moved forward, to the right as viewed in FIG. 1, the pressure load on the clutch disc 21 a relative to the flywheel 10a will ultimately become approximately zero. At this point, the clutch disc 21a is not frictionally connected to the flywheel 10a, and the flywheel 10a and the clutch disc 21 a are substantially disconnected from one another. This state of the friction clutch 21 is referred to as a clutch fractionally disengaged condition. The position of the rod 25 at this point is referred to as a standby position. The moving amount of the rod 25 from the standby position is referred to as a control amount, or a clutch stroke.

When the rod 25 is retracted in the left direction in FIG. 1 from its standby position, the pressure load on the clutch disc 21a relative to the flywheel 10a is increased in response to any increase in the moving amount - i.e., in response to any increase in the clutch stroke. At this point, some rotational speed is transmitted between the flywheel 10a and the clutch disc 21a although there is still a difference between the rotational speed of the flywheel 10a and the rotational speed of the clutch disc 21 a. The difference between those rotational speeds corresponds to the pressure load and is hereinafter referred to as a slip amount. The slip amount will ultimately become zero in response to an increase of the pressure load along with the retraction of the rod 25, at which stage the flywheel 10a and the clutch disc 21a are synchronized for rotation. The synchronized rotation of the flywheel 10a and the clutch disc 21a is referred to as a clutch fully engaged condition. The position of the rod 25 at this point is referred to as a fully engaged position. Therefore. the slip amount between the flywheel 10a and the clutch disc 21a varies by controlling the stroke of the rod 25 by the clutch actuator 23 between the standby position and the clutch fully engaged position. When the stroke of the rod 25 is part way between the standby position and the clutch fully engaged position, the condition of the flywheel 10a and the clutch disc 21a is referred to as a clutch half-engaged condition. The clutch fully engaged condition and the clutch half-engaged condition both represent clutch engaged conditions.

FIG. 3 is a diagram for explaining a basic relationship of the clutch torque relative to the clutch stroke of the rod 25. A zero point of the clutch stroke corresponds to the standby position. The clutch stroke at the right-hand side of the Zero Point corresponds to the moving amount of the rod 25 in the direction of the fully engaged position. The clutch torque represents torque which can be transmitted from the flywheel 10a to the clutch disc 21a by engagement. As explained in FIG. 3, the clutch torque is increased in response to the increase of the clutch stroke. The vehicle can be smoothly and accurately accelerated by controlling the clutch torque in response to the vehicle driving conditions. The automatic clutch assembly 20 is provided with a stroke sensor 26 for detecting a clutch stroke St which represents a moving position of the rod 25. The clutch stroke St is relied on for judging a condition for the rotation transmitted via the friction clutch 21. The stroke·sensor 26 may be mounted on the rod 25 or may be mounted elsewhere in the vehicle as illustrated in FIG. 1.

The automated manual transmission 30 according to the embodiment of the present invention is a parallel axis type gear transmission which performs for example, five forward shift stages and a single reverse shift stage. The automated manual transmission 30 includes the input shaft 31, an output shaft 32, and plural gear trains for speed change. The input shaft 31 of the transmission 30 is linked to the clutch disc 21a of the friction clutch 21 such that the driving force from the engine 10 can be transmitted to the transmission 30 via the input shaft 31. The output shaft 32 of the transmission 30 is operatively linked to an axle (not shown). A rotational speed sensor 33 illustrated in FIG. 1 is provided for detecting the rotational speed of the input shaft 31 - i.e., an input shaft rotational speed Ni. The rotational speed sensor 33 may be mounted on the input shaft 31 or may be mounted elsewhere in the vehicle. A shift actuator 41 illustrated in FIG. 1 is provided for selecting gear trains for transmitting the driving-power from the engine 10. The shift actuator 41 may be disposed in the transmission 30 or elsewhere in the vehicle. The automated manual transmission 30 can hence perform a desired shift stage therein in response to activation of the shift actuator 41.

The vehicle control system illustrated in FIG. 1 is provided with the electronic control unit (ECU) 50 which functions for example as estimating means and correcting means. The ECU 50 includes main elements such as a well-known central processing unit (CPU) with a microcomputer, a read-only-memory (ROM) for memorizing various programs and maps, a random-access-memory (RAM) for reading out and writing down various data, and an electronically erasable and programmable read only memory (EEPROM) for storing data without a back-up power source. The ECU 50 is connected with ignition switch 11, various sensors including the engine rotational speed sensor 16, the engine water temperature sensor 17, the stroke sensor 26, and the rotational speed sensor 33, the clutch actuator 23, and the shift actuator 41. The ECU 50 receives as inputs the on signal from the ignition switch 11 and signals detected by various sensors so as to detect the vehicle driving condition including the on/off condition of the ignition switch 11, the engine rotational speed Ne, the engine water temperature Tw, the clutch stroke St, the input shaft rotational speed Ni, and the like. The ECU 50 further activates the clutch actuator 23 and the shift actuator 41 based upon the vehicle driving conditions.

More particularly, the ECU 50 activates the clutch actuator 23 for adjusting the rotational speed transmitted via the friction clutch 21. Therefore, the rotational speed transmitted can be automatically controlled depending on the vehicle driving conditions. Further, the ECU 50 activates the shift actuator 41 for selecting the gear train capable of transmitting the driving power in the transmission 30. Therefore, the rotational speed change can be automatically performed in the transmission 30 in response to the vehicle driving conditions.

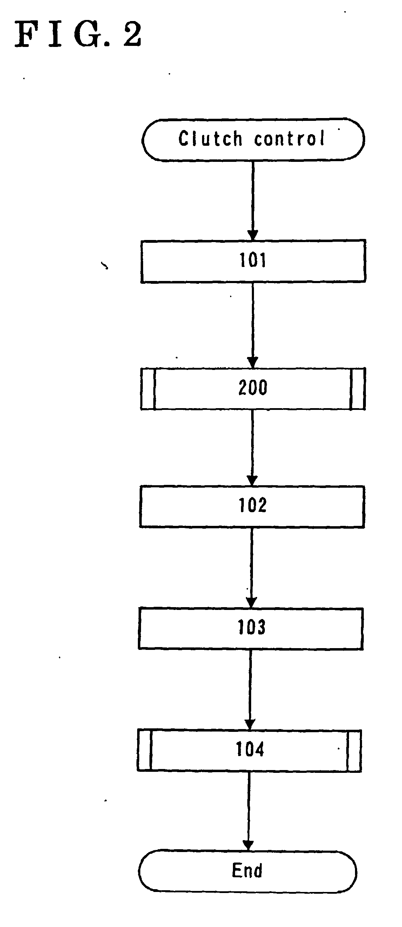

The following description explains the clutch control according to this embodiment of the present invention with reference to a flowchart illustrated in FIG. 2. The clutch control calculations are repeatedly performed at fixed time intervals whenever the ignition switch 11 is turned on.

The ECU 50 first starts a main routine at step 101 for calculating a reference target clutch torque. That is, the ECU 50 calculates a reference target clutch torque TMB for properly performing the clutch control in response to the vehicle driving conditions based upon the signals detected by the various sensors. The reference target clutch torque TMB represents a target clutch torque calculated on the assumption that the clutch disc 21a is at a predetermined reference temperature. The ECU 50 then proceeds to step 200, in which a temperature-dependent correction coefficient for clutch torque is calculated.

As illustrated in FIG. 4, when the clutch temperature - i.e., the temperature of the clutch disc 21 a - increases beyond a critical temperature, the friction coefficient µ is gradually decreased. The basic relationship between the clutch torque and the clutch stroke illustrated in FIG. 3 corresponds to clutch temperatures below the critical temperature. In practice, the clutch load (the pressure load on the clutch disc 21a) can be estimated based upon the clutch stroke, and the resulting clutch torque can be estimated by multiplying the clutch load by the friction coefficient µ. In other words, the relationship of the clutch torque relative to the clutch stroke is a linear relationship if the friction coefficient µ is constant. A correction coefficient depending on clutch temperature can effectively absorb influences on the actual clutch torque due to variation of the friction coefficient µ in order to reduce the difference from the relationship illustrated in FIG. 3. For example, when the friction coefficient µ is decreased because of an increase of the clutch temperature, the correction coefficient, which is temperature dependent, is used to calculate an increased target clutch torque. That increased target clutch torque, coupled with the lower friction coefficient µ, is effective to achieve in practice the intended clutch torque. In this way, compensation for decrease of the clutch torque relative to the clutch stroke - i.e., relative to the clutch load, is conducted.

The ECU 50 performs a subroutine at step 200 after calculation of the temperature dependent correction coefficient. Through the subroutine, a clutch estimated temperature Tc(n) estimated through a procedure at this time is updated as a clutch estimated temperature buffer Tc(n-1). The clutch estimated temperature buffer Tc(n-1) is read at a procedure at the next time and is applied for estimating the clutch temperature.

Going back to the main routine, the ECU 50 proceeds to step 102 for calculating a target clutch torque TM. The target clutch torque TM is calculated by multiplying the reference target clutch torque TMB calculated at step 101 by the temperature dependent correction coefficient. The ECU 50 then proceeds to step 103 for calculating a target clutch stroke. More particularly, The ECU 50 calculates at step 103 a target clutch stroke corresponding to the target clutch torque TM calculated based upon the relationship illustrated in FIG. 3. At step 104, the ECU 50 performs a feedback control so as to substantially match the detected clutch stroke St with the calculated target clutch stroke. The main routine is here temporarily terminated.

As described above, at least following possible effects can be yielded according to the embodiment of the present invention.

According to the above described embodiment of the present invention, the target clutch torque, and thus the target clutch stroke, is corrected based upon the estimated clutch temperature. That is, the target clutch torque, and thus the target clutch stroke, is corrected so as to absorb fluctuations of the friction coefficient µ of the clutch disc based on the estimated clutch temperature. Therefore, the system performs the feedback control for adjusting the actual clutch torque to the target clutch torque.

The present invention is not limited only to the above-described embodiment, and modifications can be applied as described below.

According to the above described embodiment of the present invention, the clutch torque is controlled by the clutch actuator 23 which operates the clutch lever 22 along with the movement of the rod 25. Alternatively, the clutch torque can be controlled by a clutch actuator which operates the release bearing 27, the diaphragm spring 28, or the pressure plate 29 directly.

Further, according to the above described embodiment of the present invention, the clutch temperature can be estimated in response to the vehicle driving conditions. Alternatively, the clutch temperature can be estimated by a sensor for detecting a temperature of the clutch disc 21a.

Still further, according to the above described embodiment of the present invention, the temperature dependent correction coefficient for the clutch torque is applied to correct the actual clutch torque in light of the influence due to changes in the friction coefficient µ. Alternatively or in addition, a temperature dependent correction coefficient for the clutch torque could be applied to correct the actual clutch torque in light of the influence due to thermal expansion of the clutch disc 21a, the rod 25, the clutch lever 22, the release bearing 27, the diaphragm spring 28, and the pressure plate 29.

According to the above described embodiment of the present invention, the target clutch stroke of the rod 25 is calculated based upon the target clutch torque TM which is obtained by correcting the reference target clutch torque TMB. The actual clutch stroke is changed through the feedback control based upon the target clutch stroke. Alternatively, a reference target clutch stroke can be calculated based upon the reference target clutch torque. The actual clutch stroke is changed through a feedback control based upon the target clutch stroke which is obtained by correcting the reference target clutch stroke. A variety of these calculations are yielded simply in accordance with a variety of calculating orders. Therefore, these calculations can be substantially counted as equivalent calculations. Further, the target clutch stroke or the target clutch torque can be calculated by various calculating methods which are fully equivalent to the calculations described above in accordance with the relationship illustrated in FIG. 3.

## Claims

1. A method of controlling the transmission of a clutch torque between a flywheel (10a) and a clutch disc (21a) by controlling the clutch stroke of a clutch actuator (23), **characterized in that**:
a reference target clutch torque (TMB) is calculated (step 101) at a predetermined reference temperature;
a clutch temperature (Tc(n) ) at the clutch disc (21 a) is measured or calculated (step 200);
a friction coefficient (µ) between the flywheel (10a) and the clutch disc (21a) at the measured or estimated clutch temperature (Tc(n)) is calculated (step 200);
a target clutch torque (TM) is calculated (step 102) by multiplying the reference target clutch torque (TMB) by the calculated friction coefficient (µ);
a target clutch stroke is calculated (step 103), being the clutch stroke that would be necessary to achieve the target clutch torque (TM) at the predetermined reference temperature (Tc(n) ); and
the clutch actuator (23) is operated in accordance with the calculated target clutch stroke, with feedback from the clutch actuator (23) being used to confirm that the clutch stroke (St) achieved in practice is the same as the calculated target clutch stroke (step 104).

2. A method according to claim 1, wherein the predetermined reference temperature (Tc(n) ) at which the reference target clutch torque (TMB) is calculated is a temperature at which the friction coefficient between the flywheel (10a) and the clutch disc (21a) does not vary significantly with temperature fluctuations of the clutch disc (21a).

3. A method according to claim 1 or 2, wherein the calculated friction coefficient (µ) is obtained from a look-up table in memory.

4. A method according to any one of claims 1 to 3, wherein the target clutch stroke is calculated from a map based upon a predetermined relationship between clutch stroke and the resulting clutch torque at the predetermined temperature.

## Patentansprüche

1. Verfahren zur Steuerung der Übertragung eines Kupplungsmoments zwischen einem Schwungrad (10a) und einer Kupplungsscheibe (21 a) durch Steuerung des Kupplungswegs einer Kupplungsbetätigung (23), **dadurch gekennzeichnet, dass**
ein Referenz-Soll-Kupplungsmoment (TMB) bei einer vorbestimmten Referenztemperatur berechnet wird (Schritt 101);
eine Kupplungstemperatur (Tc(n)) bei der Kupplungsscheibe (21 a) gemessen oder berechnet wird (Schritt 200);
ein Reibungskoeffizient (µ) zwischen dem Schwungrad (10a) und der Kupplungsscheibe (21a) bei der gemessenen oder abgeschätzten Kupplungstemperatur (Tc(n)) berechnet wird (Schritt 200);
ein Soll-Kupplungsmoment (TM) durch Multiplizieren des Referenz-Soll-Kupplungsmoments (TMB) mit dem berechneten Reibungskoeffizienten (µ) berechnet wird (Schritt 102);
ein Soll-Kupplungsweg berechnet wird (Schritt 103), der der Kupplungsweg ist, der zum Erreichen des Soll-Kupplungsmoments (TM) bei der vorbestimmten Referenztemperatur (Tc(n)) notwendig wäre; und
die Kupplungsbetätigung (23) gemäß dem berechneten Soll-Kupplungsweg betrieben wird, mit Feedback von der Kupplungsbetätigung (23), die zum Bestätigen verwendet wird, dass der in der Praxis erreichte Kupplungsweg (St) dser Gleiche wie der berechnete Soll-Kupplungsweg ist (Schritt 104).

2. Verfahren gemäß Anspruch 1, wobei die vorbestimmte Referenztemperatur (Tc(n)), bei der das Referenz-Soll-Kupplungsmoment (TMB) berechnet wird, eine Temperatur ist, bei der der Reibungskoeffizient zwischen dem Schwungrad (10a) und der Kupplungsscheibe (21a) nicht signifikant von den Temperaturschwankungen der Kupplungsscheibe (21 a) abweicht.

3. Verfahren nach Anspruch 1 oder 2, wobei der berechnete Reibungskoeffizient (µ) von einer Nachschlagetabelle aus einem Speicher erhalten wird.

4. Verfahren gemäß einem der Ansprüche 1 bis 3, wobei der Soll-Kupplungsweg von einer Karte, die auf einem vorbestimmten Verhältnis zwischen dem Kupplungsweg und dem resultierenden Kupplungsmoment bei einer vorbestimmten Temperatur basiert, berechnet wird.

## Revendications

1. Procédé de commande de la transmission d'un couple d'embrayage entre un volant (10a) et un disque d'embrayage (21a) en commandant la course de l'embrayage d'un actionneur d'embrayage (23), **caractérisé en ce que** :
un couple d'embrayage cible de référence (TMB) est calculé (étape 101) à une température de référence prédéterminée ;
une température d'embrayage (Tc(n)) au niveau du disque d'embrayage (21a) est mesurée ou calculée (étape 200) ;
un coefficient de friction (µ) entre le volant (10a) et le disque d'embrayage (21a) à la température d'embrayage (Tc(n)) mesurée ou estimée est calculé (étape 200) ;
un couple d'embrayage cible (TM) est calculé (étape 102) en multipliant le couple d'embrayage cible de référence (TMB) par le coefficient de friction (µ) calculé ;
une course d'embrayage cible est calculée (étape 103), qui est la course d'embrayage qui serait nécessaire pour atteindre le couple d'embrayage cible (TM) à la température de référence (Tc(n)) prédéterminée ; et
l'actionneur d'embrayage (23) est mis en oeuvre conformément à la course d'embrayage cible calculée, la rétroaction de l'actionneur d'embrayage (23) étant utilisée pour confirmer que la course d'embrayage (St) atteinte dans la pratique est identique à la course d'embrayage cible calculée (étape 104).

2. Procédé selon la revendication 1, dans lequel la température de référence (Tc(n)) prédéterminée à laquelle le couple d'embrayage cible de référence (TMB) est calculé est une température à laquelle le coefficient de friction entre le volant (10a) et le disque d'embrayage (21a) ne varie pas de manière importante avec les fluctuations de température du disque d'embrayage (21a).

3. Procédé selon la revendication 1 ou 2, dans lequel le coefficient de friction (µ) calculé est obtenu à partir d'une table de correspondance en mémoire.

4. Procédé selon l'une quelconque des revendications 1 à 3, dans lequel la course d'embrayage cible est calculée à partir d'une carte basée sur une relation prédéterminée entre la course d'embrayage et le couple d'embrayage résultant à la température prédéterminée.
